# EUROPÄISCHE PATENTSCHRIFT

(11) **EP 0 444 403 B1**
(45) Veröffentlichungstag und Bekanntmachung des Hinweises auf die Patenterteilung: **26.05.1993**
(21) Anmeldenummer: 91100336.6
(22) Anmeldetag: 11.01.1991
(51) Int. Cl.: F24D 19/10

(54) **Verfahren zum Steuern einer Sonnenkollektoranlage**
Method for controlling an installation with solar collectors
Méthode pour contrôler une installation de capteurs solaires

(30) Priorität: 02.03.1990 DE 4006562
(43) Veröffentlichungstag der Anmeldung: 04.09.1991
(73) Patentinhaber: Müller, Friedrich, D-74589 Satteldorf (DE)
(72) Erfinder: Müller, Friedrich, D-74589 Satteldorf (DE)
(74) Vertreter: von Hellfeld, Axel, Dr. Dipl.-Phys.

(56) Entgegenhaltungen:
- FR-A- 2 385 056
- US-A- 4 399 807
- PATENT ABSTRACTS OF JAPAN vol. 7, no. 207 (M-242)(1352) 13. September 1983& JP-A-58 104 464 (MATSUSHITA DENKI SANGYO K.K. ) 21. Juni 1983

## Beschreibung

Die Erfindung betrifft ein Verfahren zum Steuern einer Sonnenkollektoranlage sowie eine Sonnenkollektoranlage mit zumindest einem Sonnenkollektor, der über eine von einem Wärmeträger durchströmte Leitung mit zumindest einer Wärmeabnahmeeinrichtung verbunden ist, um Wärme vom Sonnenkollektor zur Wärmeabnahmeeinrichtung zu übertragen, und mit einer Steuereinrichtung zum Steuern der Wärmeträgerströmung in Abhängigkeit von am Sonnenkollektor und an der Wärmeabnahmeeinrichtung gemessenen Temperaturen, wobei für die an der Wärmeabnahmeeinrichtung gemessene Temperatur ein Schwellenwert vorgegeben wird und dann, wenn die Temperatur an der Wärmeabnahmeeinrichtung den Schwellenwert überschreitet, die Wärmeträgerströmung unterbrochen wird.

Vorrichtungen, die Sonnenenergie absorbieren, so daß die entwickelte Wärme mit einem relativ günstigen Wirkungsgrad zur Erwärmung von z.B. Brauchwasser (Warmwasserbereitung, Gebäudeheizung etc.) genutzt werden kann, werden Sonnenkollektoren genannt. Nicht fokussierende Sonnenkollektoren enthalten eine (in der Regel geschwärzte) Absorberplatte, die direkte und diffuse Sonnenstrahlung absorbiert und als Wärme an ein darunter liegendes, von einem geeigneten Wärmeträger durchflossenens Rohrsystem abgibt. Bei Temperaturen bis 150°C wird als Wärmeträger meist eine Wasser-Frostschutzmischung verwendet.

Im Stand der Technik werden solche Sonnenkollektoranlagen gemäß einer Temperaturdifferenz gesteuert, die sich aus am Sonnenkollektor und am Wärmeabnehmer gemessenen Temperaturen ergibt. Hierzu vergleichen zumindest zwei Temperaturfühler die Temperatur am Sonnenkollektor mit der Temperatur an einer oder mehreren Wärmeabnahmeeinrichtungen (z.B. in einem Warmwasserspeicher) und dann, wenn am Sonnenkollektor eine höhere Temperatur als in der Wärmeabnahmeeinrichtung gemessen wird, wird die Sonnenkollektoranlage (auch Solaranlage genannt) über eine Umwälzpumpe und ggf. einen Mischer in Betrieb genommen, so daß die im Sonnekollektor gesammelte Wärme an die Wärmeabnahmeeinrichtung überführt wird. Dabei können mehrere Wärmeabnahmeeinrichtungen gleichzeitig oder nacheinander mit Wärme gespeist werden.

Bei solchen Sonnenkollektoranlagen kann es zu einer problematischen Überhitzung kommen wenn die durch Absorption von Sonnenenergie gesammelte Wärme den Wärmebedarf der Wärmeabnahmeeinrichtung übersteigt. Eine solche Überhitzung der Sonnenkollektoranlage kann insbesondere in den Sommermonaten auftreten, wenn bei hoher solarer Einstrahlung wenig erhitztes Wasser gezapft wird (z.B. im Urlaub). Auch bei großdimensionierten Sonnenkollektor-Flächen können bei hoher solarer Einstrahlung Temperaturen erreicht werden, die auch bei normaler Wärmeentnahme (z.B. Warmwasserzapfung) extrem hohe Temperaturen in der Sonnenkollektoranlage zur Folge haben.

Das Problem der Überhitzung kann in einer Sonnenkollektoranlage sowohl die Wärmeabnahmeeinrichtung als auch den Sonnenkollektor selbst betreffen. Zwei Arten einer möglichen Überhitzung können unterschieden werden:
1. Die Sonnenkollektoranlage hat keine Temperaturbegrenzung. Ist als Wärmeabnahmeeinrichtung z.B. ein Warmwasserspeicher vorgesehen, dann besteht die Gefahr, daß das Wasser im Warmwasserspeicher auf Temperaturen über 100°C erhitzt wird mit der Folge einer extremen Verkalkungsgefahr und Materialbelastung sowie der Gefahr, daß extrem heißes Wasser gezapft wird und Verbrühungen auftreten können.
2. Die Sonnenkollektoranlage weist bezüglich der Wärmeabnahmeeinrichtung (z.B. ein Warmwasserspeicher) eine Temperaturbegrenzung auf. In diesem Fall wird ein Schwellenwert für die Temperatur im Warmwasserspeicher vorgegeben, z.B. 60°C. Sobald die Temperatur des Wassers im Warmwasserspeicher diesen Schwellenwert erreicht hat, wird die Sonnenkollektoranlage abgestellt, d.h. es wird keine Wärme mehr vom Sonnekollektor zum Warmwasserspeicher überführt. Dann besteht jedoch die Gefahr, daß bei weiterhin hoher solarer Einstrahlung aufgrund der fehlenden Wärmeabnahme die Sonnenkollektoren selbst sehr stark aufgeheizt werden (auf Temperaturen von 200°C und mehr), so daß das im Sonnenkollektor eingesetzte Material leidet und/oder die Wärmeträgerflüssigkeit zum Sieden kommt. Eine solche Überhitzung im Sonnenkollektor beschleunigt die Alterung des Materials und kann im Extremfall zu Defekten führen.

Aus der DE 29 45 393 A1 ist ein Verfahren zum Regeln einer Sonnenkollektoranlage bekannt, bei dem der Umlauf der Wärmeträgerflüssigkeit unterbrochen wird, wenn die Temperatur der Wärmeträgerflüssigkeit am Austritt aus dem Kollektor niedriger ist als eine Temperatur, die abhängig ist von einer Temperaturdifferenz, die am Warmwasserspeicher gemessen wird. Hingegen wird der Umlauf der Wärmeträgerflüssigkeit wieder aufgenommen, wenn die genannten Temperatur höher ist als die von der Temperaturdifferenz am Warmwasserspeicher abhängige Temperatur. Hierdurch soll bei der Steuerung der Sonnenkollektoranlage der Umstand berücksichtigt werden, daß unter gewissen Betriebsbedingungen die thermischen Verluste zwischen dem Sonnenkollektor und dem Wärmespeicher zu einer Absenkung der Temperatur der Wärmeträgerflüssigkeit vor ihrem Eintritt in den Warmwasserspeicher führen kann, wodurch es zu einer unerwünschten Umkehr der Wärmetransportrichtung kommen könnte.

Aus der DE 26 40 135 A1 ist eine Sonnekollektoranlage bekannt, bei der dem Sonnenkollektor ein gesonderter Wärmetauscher zugeordnet ist, um Überschußwärme des Kollektors abzuführen.

Ein Firmenprospekt der VAMA-Wärmetechnik, D 3200 Hildesheim, Titel: "Helioquell- die sonnengeheizte Warmwasserbereitung", vom Februar 1978 beschreibt eine Sonnenkollektoranlage gemäß dem Oberbegriff des Patentanspruches 1. Dabei wird ein Warmwasserspeicher aufgeteilt in einen sog- Bereitschaftsteil und einen sogenannten Solarteil- Eine Umwälzpumpe für die Wärmeträgerflüssigkeit wird abgeschaltet, wenn die Temperatur im Bereitschaftsteil des Speichers einen extrem hohen Wert von 90°C erreicht hat.

Die Erfindung setzt sich das Ziel, mit möglichst einfachen Mitteln eine Überhitzung einer Sonnenkollektoranlage zu vermeiden.

Erfindungsgemäß wird diese Aufgabe gemäß den Merkmalen des Patentanspruches 1 gelöst.

Die Erfindung macht sich die Erkenntis zunutze, daß der Wirkungsgrad einer Sonnenkollektoranlage mit steigender Temperatur stark abfällt. Zum Beispiel ist ein typischer Wirkungsgrad einer Sonnenkollektoranlage bei einer Temperatur von 60°C etwa 60 %. Steigt die Temperatur auf 150° an, so liegt bei der gleichen Anlage der Wirkungsgrad typischerweise nur noch bei 10 %.

Die Erfindung nutzt diese Verminderung des Wirkungsgrades zur Vermeidung einer Überhitzung der Sonnenkollektoranlage dadurch aus, daß dann, wenn das Wasser in der Wärmeabnahmeeinrichtung (z.B. Warmwasserspeicher) eine hinreichend hohe Temperatur erreicht hat, die für den vorgesehenen Gebrauchszweck des Wassers erwünscht ist, bei weiterer Wärmeaufnahme im Sonnenkollektor die Wärme nicht mehr an das Wasser in der Wärmeabnahmeeinrichtung abgegeben wird, sondern zunächst die Temperatur im Kollektor (Absorber mit Wärmeträger) erhöht wird, um den Wirkungsgrad der Anlage zu verschlechtern. Die Anlage nimmt damit insgesamt weniger Sonnenenergie auf. Erst dann, wenn die Temperatur im Sonnenkollektor sich einem kritischen Wert nähert, erfolgt kurzzeitig ein Wärmeaustausch zwischen Sonnenkollektor und Wärmeabnahmeeinrichtung, wobei aber die Temperatur im Sonnenkollektor nicht an die Temperatur des Wassers in der Wärmeabnahmeeinrichtung angeglichen wird, sondern vielmehr die Temperatur im Sonnenkollektor auf einem hohen Niveau unterhalb des kritischen Grenzwertes der Kollektortemperatur gehalten wird (um den Wirkungsgrad der Anlage weiterhin gering zu halten). Zum Beispiel kann die kritische Temperatur im Sonnenkollektor, bei der das Material gefährdet ist und/oder die Wärmeträgerflüssigkeit nahe dem Siedepunkt ist, bei 150°C liegen. Erreicht die Temperatur im Sonnenkollektor diesen Wert, wird eine Umwälzpumpe zum Erzeugen der Wärmeträgerströmung so lange in Betrieb gesetzt, bis die Temperatur im Sonnenkollektor um eine vorgegebene Temperaturdifferenz von z.B. 10° reduziert ist (also beim angegebenen Beispiel von 150°C auf 140°C). Dabei wird zwar die Temperatur des Wassers in der Wärmeabnahmeeinrichtung erhöht, jedoch ist der oben genannte Schwellenwert der Temperatur der Wärmeabnahmeeinrichtung so eingestellt, daß eine gewisse Temperaturerhöhung darüberhinaus ohne Nachteil ist.

Gemäß einer bevorzugten Ausgestaltung der Erfindung ist vorgesehen, daß der vorgegebene Grenzwert der Temperatur am Sonnenkollektor einen vorgegebenen Betrag, insbesondere 0 bis 30°C, bevorzugt 5 bis 20°C, unterhalb der maximal verträglichen Temperatur am Sonnenkollektor liegt.

Gemäß einer weiteren bevorzugten Ausgestaltung der Erfindung ist vorgesehen, daß der vorgegebene Schwellenwert der Temperatur an der Wärmeabnahmeeinrichtung einen vorgegeben Betrag, insbesondere 10 bis 60°C, bevorzugt 30 bis 50°C, unterhalb der maximal verträglichen Temperatur an der Wärmeabnahmeeinrichtung liegt.

Sollte in einer Situation mit extrem hoher Solareinstrahlung und ungewöhnlich geringem Wärmeverbrauch auf seiten der Wärmeabnahmeeinrichtung es trotz der vorstehend beschriebenen Maßnahmen zu einer Überhitzung sowohl des Wassers in der Wärmeabnahmeeinrichtung als auch Sonnenkollektor kommen, so ist gemäß einer bevorzugten Weiterbildung der Erfindung die Sonnenkollektoranlage mit einem oberhalb des Sonnenkollektors angeordneten Wärmetauscher versehen, der bei einer extremen Überhitzung auch bei Ausfall von Strom oder bei einem Defekt einer Pumpe wirksam werden kann.

Gemäß einer anderen bevorzugten Weiterentwicklung der Erfindung wird die Steuerung der Sonnenkollektoranlage so programmiert, daß dann, wenn im Verlauf eines zumindest zwölfstündigen Zyklus die Temperatur am Sonnenkollektor einen vorgegebenen Schwellenwert zumindest einmal überschritten hat, die Wärmeträgerströmung auch dann in Gang gesetzt wird, wenn die Temperatur am Sonnenkollektor tiefer ist als die Temperatur an der Wärmeabnahmeeinrichtung und die Temperatur an der Wärmeabnahmeeinrichtung höher ist als ein vorgegebener Wert. Dieser Steuerung der Sonnenkollektoranlage liegt die Erkenntnis zugrunde, daß die Gefahr einer Überhitzung insbesondere bei mehreren aufeinander folgenden Tagen mit hoher Sonneneinstrahlung besteht, wenn aufseiten der Wärmeabnahmeeinrichtung nur ein geringer Energieverbrauch stattfindet. In diesem Fall bewirkt die vorstehend beschriebene Steuerung der Anlage in der Nacht eine Abkühlung des Wassers aus der Wärmeabnahmestelle mit Hilfe des Kollektors (die Sonnenkollektoranlage wird also kurzzeitig "umgekehrt" betrieben). Dadurch hat die Sonnenkollektoranlage für den darauf folgenden Tag wieder eine hinreichende "Reserve", um bei extremer Sonneneinstrahlung Wärme in einen Speicher abführen zu können.

Nachfolgend werden Ausführungsbeispiele der Erfindung anhand der Zeichnung näher erläutert. Es zeigt:
- Fig. 1: schematisch eine Sonnenkollektoranlage mit drei Wärmeabnahmeeinrichtungen,
- Fig. 2: ein anderes Ausführungsbeispiel einer Sonnenkollektoranlage mit einer Wärmeabnahmeeinrichtung und einem zusätzlichen Wärmetauscher und
- Fig. 3: ein weiteres Ausführungsbeispiel einer Sonnenkollektoranlage einschließlich eines Heizkessels.

In den Figuren sind einander entsprechende Bauteile mit gleichen Bezugszeichen versehen.

Ein Sonnenkollektor 1 ist über ein Leitungssystem (Pfeile P₁) mit verschiedenen Wärmeabnahmeeinrichtungen (siehe unten) verbunden. Eine elektronische Steuerung (2) steuert die Anlage erfindungsgemäß.

Als Wärmeabnahmeeinrichtung mit höchster Priorität ist ein Warmwasserspeicher 3 vorgesehen.

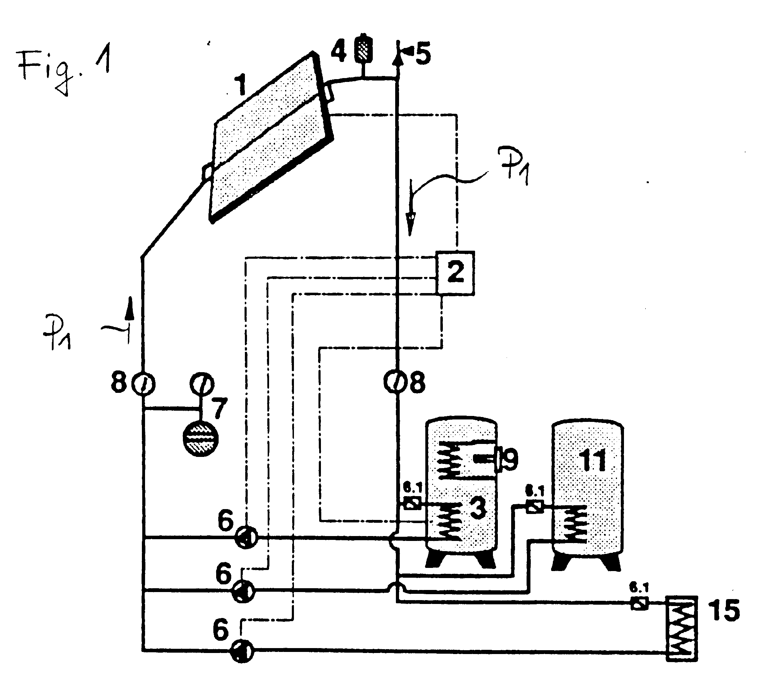

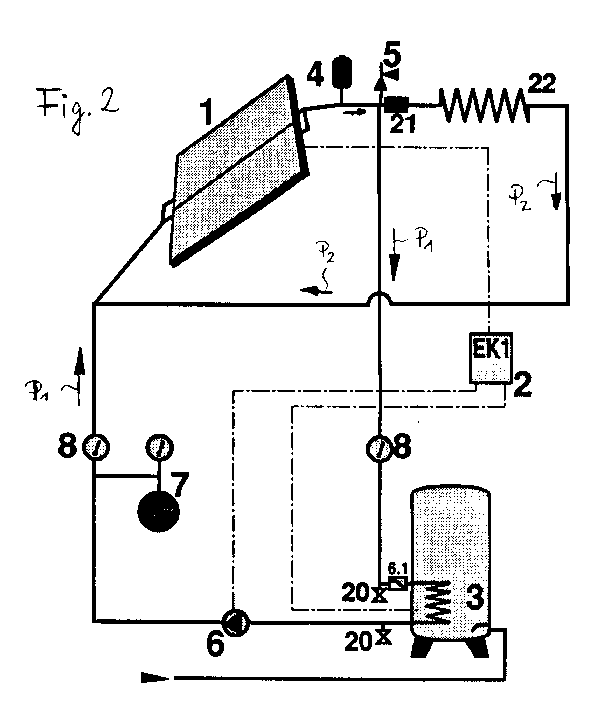

Das Leitungssystem weist gemäß den Fig. 1 und 2 an seiner höchsten Stelle in an sich bekannter Weise einen Entlüftungstopf 4 und ein Sicherheitsventil 5 auf. Umwälzpumpen 6 werden jeweils bedarfsweise von der Steuerung 2 gemäß gemessenen Temperaturen in Betrieb gesetzt. Die Umwälzpumpen 6 sind jeweils mit Absperrschiebern versehen, die ebenfalls von der Steuerung 2 betätigt werden, um wahlweise Wärmeabnahmeeinrichtungen vom Kreislauf absperren zu können.

An den eingezeichneten Stellen sind in den einzelnen Kreisläufen jeweils Rückschlagventile 6.1 angeordnet, um eine Strömung ausschließlich in Richtung der Pfeile P₁ zu ermöglichen.

Die Anlage weist an den in den Figuren eingezeichneten Stellen ein Membran-Ausdehnungsgefäß 7 und Thermometer 8 auf.

Der Warmwasserspeicher 3 ist zusätzlich in als solches bekannter Weise mit einem Thermostat 9 sowie einem zusätzlichen Elektroheizeinsatz versehen.

Als neben dem Warmwasserspeicher 3 zusätzliche Wärmeabnahmeeinrichtung ist ein Pufferspeicher 11 für eine Heizungsanlage (nicht gezeigt) vorgesehen. Eine weitere Wärmeabnahmeeinrichtung wird durch einen Gegenstromwärmetauscher 15 (z.B. für ein Schwimmbad) gebildet.

Es sei angenommen, daß die kritische Temperatur im Sonnenkollektor 1 bei etwa 150°C liegt. Erhitzt sich der Sonnenkollektor 1 über diese Temperatur, so ist das Material einschließlich der Wärmeträgerflüssigkeit gefährdet. Weiterhin sei angenommen, daß für den Betrieb des Warmwasserspeichers 3 die erwünschte Temperatur bei etwa 60°C liegt.

In der programmierten Steuerung 2 der Sonnenkollektoranlage wird dann entsprechend für die Temperatur T_{W} an der Wärmeabnahmeeinrichtung (Warmwasserspeicher 3) ein Schwellenwert T_{WS} von 60° vorgegeben. Dieser Schwellenwert ist so bemessen, daß bei seinem Erreichen noch keine akute Gefahr besteht, sondern noch durchaus eine "Reserve" nach oben besteht, z.B. von 10 bis 20°C.

Liegt der kritische Wert der Temperatur im Sonnenkollektor 1 bei z.B. 150°, so wird für die dort gemessene Temperatur T_{S} ein Grenzwert T_{SG} von z.B. 140°C vorgegeben und in der programmierten Steuerung 2 verwendet.

Es werden laufend die Temperaturen der Wärmeträgerflüssigkeit im Sonnenkollektor 1 und des Wassers in der Wärmeabnahmeeinrichtung (z.B. Warmwasserspeicher 3) gemessen und in der Steuerung 2 berücksichtigt.

Erreicht die Temperatur des Wassers im Warmwasserspeicher 3 den vorgegebenen Schwellenwert T_{WS} von z.B. 60°C, so setzt die Steuerung 2 zunächst die zugehörige Umwälzpumpe 6 still, so daß das Wasser im Warmwasserspeicher 3 nicht weiter aufgeheizt wird, auch wenn der Sonnenkollektor 1 weiterhin Sonnenenergie aufnimmt. Bei Einschluß der anderen Wärmeabnahmeeinrichtungen (Pufferspeicher 11 für eine Heizung und ggf. Wärmetauscher 15 für z.B. ein Schwimmbad) können diese Einrichtungen ggf. dazu verwendet werden, bei einer weiteren Aufheizung des Sonnenkollektors zunächst Energie durch Betätigung der diesen Wärmeabnahmeeinrichtungen zugeordneten Umwälzpumpen 6 abzuführen. Es sei nun angenommen, daß solche Möglichkeiten der Energieaufnahme in der Sonnenkollektoranlage nicht mehr zur Verfügung stehen, entweder weil sie nicht vorhanden oder schon ausgeschöpft sind.

Es wird also die Temperatur des Wassers im Warmwasserspeicher 3 welche den Schwellenwert T_{WS} = 60°C erreicht hat, nicht weiter erhöht, sondern bei abgesperrter Umwälzpumpe 6 erhitzt sich bei weiterer Sonneneinstrahlung der Sonnenkollektor 1. Erst dann, wenn die Temperatur im Sonnenkollektor 1 den kritischen Grenzwert T_{SG} von z.B. 140°C erreicht hat, wird wieder eine Umwälzpumpe 6 betätigt, um kurzzeitig Energie aus dem Sonnenkollektor in eine Wärmeabnahmeeinrichtung, z.B. den Warmwasserspeicher 3, zu überführen. Dabei erfolgt aber nur eine Absenkung der Temperatur T_{S} im Sonnenkollektor 1 um einen relativ geringen Wert, z.B. von 140°C auf 130°C, um den Sonnenkollektor 1 weiterhin auf relativ hoher Temperatur zu halten, so daß der Wirkungsgrad der Sonnenkollektoranlage relativ gering bleibt und somit nur ein relativ geringer Teil der eingestrahlten Sonnenenergie von der Anlage aufgenommen wird. Hierdurch kann auch bei relativ hoher Sonneneinstrahlung und geringem Energieverbrauch auf seiten der Wärmeabnahmeeinrichtung eine Überhitzung sowohl des Sonnenkollektors 1 als auch des Wassers in der Wärmeabnahmeeinrichtung vermieden werden.

Sollte zum Beispiel während mehrerer aufeinanderfolgender Tage eine extrem hohe Sonneneinstrahlung bei geringem Wärmeverbrauch vorliegen, wird gemäß einer besonderen Ausführung der Erfindung die Anlage so gesteuert, daß dann, wenn im Verlauf eines mehrstündigen, z.B. zwölfstündigen Zyklus die Temperatur T_{S} am Sonnenkollektor 1 einen vorgegebenen Schwellenwert T_{SG} zumindest einmal überschritten hat, die Wärmeträgerströmung auch dann in Gang gesetzt wird, wenn die Temperatur am Sonnenkollektor T_{S} tiefer ist als die Temperatur T_{W} an der Wärmeabnahmeeinrichtung und/oder die Temperatur T_{W} an der Wärmeabnahmeeinrichtung höher ist als ein vorgegebener Wert. Es kann also auch die Solaranlage nachts in Betrieb genommen werden, wenn nur die Wärmeabnahmeeinrichtung, d.h. der Speicher, die vorgegebene Maximaltemperatur von z.B. 80°C (eine Variation dieses vorgebbaren Wertes um 10°C ist möglich) erreicht, ohne daß dabei die Temperatur am Sonnenkollektor 1 Berücksichtigung findet. Daß es nachts ist, kann einfach mittels einer Fotodiode oder auch mittels einer Uhr festgestellt werden.

Überschreitet also die Temperatur des Wassers in der Wärmeabnahmeeinrichtung (z.B. Warmwasserspeicher 3) einen vorgegebenen Maximalwert (z.B. 80°C), so läuft die Sonnenkollektoranlage nicht mehr nur dann an, wenn die Temperatur im Sonnenkollektor 1 den kritischen Grenzwert T_{SG} übersteigt, sondern ebenfalls auch dann, wenn die Temperatur im Sonnenkollektor 1 niedriger ist als die Temperatur in der Wärmeabnahmeeinrichtung. Dies wird in der Regel nachts der Fall sein. Läuft die Sonnenkollektoranlage nachts, so wird Wärme aus dem Warmwasserspeicher über den Sonnenkollektor 1 teilweise wieder an die Umwelt abgegeben. Dadurch kann die Temperatur des Wassers im Warmwasserspeicher 3 soweit abgekühlt werden, bis ein vorgegebener Wert, z.B. der oben genannte Schwellenwert T_{WS} von z.B. 60°C, erreicht ist. Dadurch hat die Sonnenkollektoranlage für den darauf folgenden Tag wieder hinreichend Reserven, um bei extrem hoher Sonneneinstrahlung eine Überhitzung der Anlage mit dem oben beschriebenen Verfahren zu vermeiden.

Die vorstehend beschriebene Steuerung einer Sonnenkollektoranlage zur Vermeidung einer Überhitzung derselben setzt funktionierende Umwälzpumpen sowie eine funktionierende Stromversorgung voraus. Sowohl bezüglich der Pumpen als auch der Stromversorgung können aber Ausfälle auftreten.

Zunächst zu einem möglichen Ausfall einer Umwälzpumpe. Bei Sonnenkollektoranlagen, die über mehrere Wärmeabnahmeeinrichtungen verfügen, sind in der Regel auch mehrere Umwälzpumpen 6 eingesetzt, wie in Fig. 1 dargestellt ist. Es ist höchst unwahrscheinlich, daß gleichzeitig alle Umwälzpumpen 6 durch Defekt ausfallen (ausgenommen ein Stromausfall, siehe unten). Fällt eine von mehreren Umwälzpumpen 6 aus, so wird dies von der Steuerung 2 festgestellt und es erfolgt dann automatisch neben einem Alarm (Warnblinklämpchen, Ton od. dergl.) eine Umschaltung aller oben beschriebener Funktionen auf die noch funktionierende Umwälzpumpe und die zugehörige Wärmeabnahmeeinrichtung. Mit anderen Worten: Die Steuerung gibt dem Benutzer einen warnenden Hinweis auf den Defekt der Umwälzpumpe und "tut ansonsten so", als ob die defekte Umwälzpumpe 6 mit der zugehörigen Wärmeabnahmeeinrichtung nicht exisistierte.

Im Falle eines Stromausfalls sind zwei Möglichkeiten zu unterscheiden: Die erste Möglichkeit besteht darin, daß die Steuerung 2 den Stromausfall feststellt, jedoch auf eine Reservebatterie umschalten kann. In diesem Fall werden durch die Steuerung folgende Funktionen ausgeführt: Ein Notstromaggregat wird in Betrieb gesetzt oder die Steuerung greift auf den Reservestrom einer größeren Batterie zurück, welche eine Umwälzpumpe oder eine andere Einrichtung zum Abführen von Wärme in Betrieb setzt. Dabei ist es zur Schonung dieser Reservebatterie sinnvoll, nur dann die Umwälzpumpe in Betrieb zu setzen, wenn die oben geschilderten kritischen hohen Temperaturen erreicht werden.

Das vorstehend beschriebene Steuerverfahren für die Sonnenkollektoranlage bei einem Stromausfall ist sowohl bei einer Störung im öffentlichen Stromnetz anwendbar als auch dann, wenn die Solaranlage durch Photovoltaik betrieben wird und eine Unterbrechung der Stromversorgung aufgrund eines Defektes in der Anlage selbst auftritt.

Eine weitere Möglichkeit, eine Überhitzung einer Sonnenkollektoranlage zu vermeiden ist in Fig. 2 näher dargestellt, wobei dem Ausführungsbeispiel gemäß Fig. 1 entsprechende Bauteile mit gleichen Bezugszeichen versehen sind. Die Vorrichtung gemäß Fig. 2 ist in der Lage, eine Überhitzung der Sonnenkollektoranlage auch ohne funktionierende Umwälzpumpe zu verhindern. Hierzu ist im Rohrleitungssystem gemäß Fig. 2 an der höchsten Stelle ein Wärmetauscher 22 angeordnet oder ein Behälter mit Flüssigkeit und es ist eine Weiche 21 vorgesehen, die in der Lage ist, den "normalen" Kreislauf gemäß den Pfeilen P₁ zu unterbrechen und einen anderen Kreislauf für die Wärmeträgerflüssigkeit gemäß den Pfeilen P₂ zu eröffnen.

Erreichen die Temperaturen in der Sonnenkollektoranlage die oben genannten kritischen Werte, dann schaltet die Weiche 21 selbsttätig das System vom Kreislauf gemäß den Pfeilen P₁ auf den anderen Kreislauf gemäß den Pfeilen P₂ um. Dies kann auch selbsttätig bei Stromausfall dadurch geschehen, daß die Weiche 21 z.B. durch ein Bimetall gesteuert wird. Bei funktionierender Stromversorgung und Steuerung 2 kann auch als Weiche 21 ein Magnetventil od. dergl. vorgesehen sein. Eröffnet die Weiche 21 den Flüssigkeitskreislauf gemäß den Pfeilen P₂, so strömt das Wärmeträgermedium allein durch Schwerkraft gespeist durch den Wärmetauscher 22 und es wird Wärme abgeführt.

Die Anlage gemäß Fig. 1 ist auch besonders geeignet, wenn bei einer großen Solaranlage eine Wärmeabnahmeeinrichtung vorgesehen ist, die nur eine sehr geringe Wärmeabnahme ermöglicht. Dies ist zum Beispiel dann der Fall, wenn eine Solaranlage für ein Gebäude die Warmwasserbereitung und Raumheizung durchführen soll und in einem solchen Fall, z.B. bei einem Industriebetrieb, nur ein sehr niedriger Warmwasserbedarf vorliegt, aber ein sehr hoher Raumheizungsbedarf. In diesem Fall könnte bei Einstellung der Steuerung auf die Warmwasserbereitung bei hoher Sonneneinstrahlung nicht die gesamte vom Sonnenkollektor gewonnene Energie aufgenommen werden, ohne daß es zu einer schädlichen oder unerwünschten Überhitzung kommt. In diesem Falle schaltet die Steuerung, welche permanent die Temperatur der Sonnenkollektoren und der Wärmeabnahmeeinrichtungen vergleicht, ab einer bestimmten Temperaturdifferenz zwischen Sonnenkollektor und Warmwasserspeicher (z.B. 20°C) zusätzlich noch die zweite Umwälzpumpe für die weitere Wärmeabnahmeeinrichtung (z.B. Heizung, Pufferspeicher oder Gegenstromwärmetauscher 15) in Betrieb.

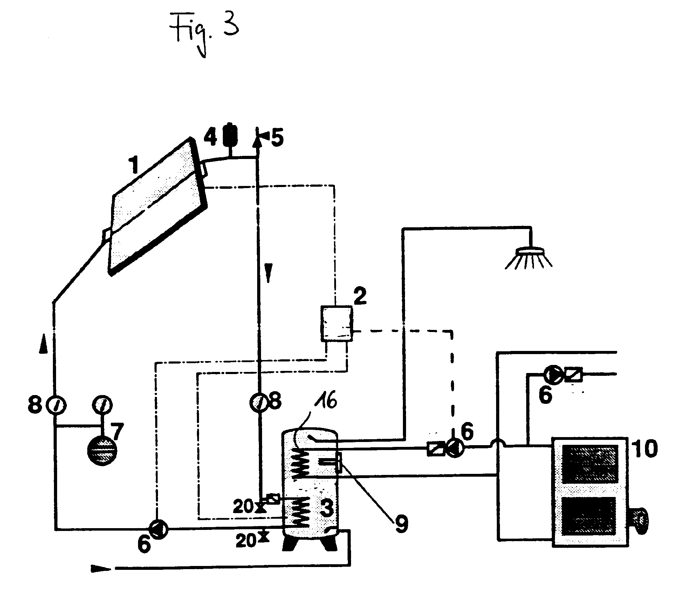

Fig. 3 zeigt ein weiteres Ausführungsbeispiel einer Sonnenkollektoranlage, bei der ein Heizkessel 10 integriert ist. Eine Vielzahl von Solaranlagen für die Warmwasserbereitung weist im oberen Bereich des Warmwasserspeichers eine Möglichkeit zum Nachheizen auf. Wenn bei ungünstigen Wetterbedingungen die Sonnenkollektoranlage eine gewünschte Temperatur in der Wärmeabnahmeeinrichtung (Speicher) von z.B. 50°C nicht erreicht, wird über einen Elektro-Heizeinsatz oder auch über einen Heizkessel die Temperatur im Speicher auf den gewünschten Mindestwert angehoben. Bei Verwendung eines Heizkessels ist es möglich, in einfacher Weise Überhitzungen der Sonnenkollektoranlage zu vermeiden. Dies sei anhand der Fig. 3 erläutert.

Fig. 3 zeigt zusätzlich zu den anhand der Fig. 1 und 2 erläuterten Baugruppen noch einen Heizkessel 10, der normalerweise auch für die Nachheizung des Wassers im Speicher 3 verwendet wird. Die zugehörige Umwälzpumpe 6 wird entsprechend betätigt, um im Heizkessel 10 erhitztes Wasser zum Speicher 3 zu überführen. Im Speicher ist in dessen oberen Bereich ein Wärmetauscher 16 für diesen Zweck vorgesehen.

Normalerweise wird die Umwälzpumpe 6 zwischen Heizkessel 10 und Speicher 3 nur dann in Betrieb gesetzt, wenn Wärme vom Heizkessel 10 zum Speicher 3 überführt werden soll. Erreicht aber das Wasser im Speicher eine gegebene Maximaltemperatur von z.B. 60°C, welche nicht überschritten werden soll, so kann das System aus Speicher 3 und Heizkessel 10 auch umgekehrt betrieben werden, d.h. es kann Wärme aus dem Speicher 3 in den Heizkessel überführt werden. Dies gilt insbesondere dann, wenn im Sommerhalbjahr der Heizkessel 10 abgeschaltet ist, was üblicherweise der Fall ist. Zur Vermeidung einer Überhitzung der Sonnenkollektoranlage mißt also ein Fühler die Wassertemperatur im Speicher 3 und stellt ein Überschreiten einer vorgegebenen Maximaltemperatur fest. Die Steuerung betätigt dann die Umwälzpumpe 6 zwischen Speicher und Heizkessel 10 solange, bis die vorgegebene Maximaltemperatur wieder unterschritten ist. Eine solche Betätigung der Umwälzpumpe 6 zwischen Speicher 3 und Heizkessel 10 muß dann sofort unterbunden werden, wenn die Umwälzpumpe zwischen Speicher und Sonnenkollektor 1 nicht mehr arbeitet (funktioniert). Auch kann die Steuerung so eingestellt sein, daß verhindert ist, daß gleichzeitig beide Umwälzkreise in Betrieb sind.

Der Heizkessel 10 kann mit gutem Wirkungsgrad überschüssige Wärme aus der Sonnenkollektoranlage abführen, da er große Metallmassen mit hoher spezifischer Wärmekapazität aufweist und aufgrund des Kaminzuges etc. schnell Wärme abgibt. Auf diese Weise kann auch eine gewisse Unterstützung der Raumheizung vorgenommen werden.

## Patentansprüche

1. Verfahren zum Steuern einer Sonnenkollektoranlage mit zumindest einem Sonnenkollektor (1), der über eine von einem Wärmeträger durchströmte Leitung mit zumindest einer Wärmeabnahmeeinrichtung (3, 11, 15) verbunden ist, um Wärme vom Sonnenkollektor zur Wärmeabnahmeeinrichtung zu übertragen, und mit einer Steuereinrichtung (2) zum Steuern der Wärmeträgerströmung in Abhängigkeit von am Sonnenkollektor und an der Wärmeabnahmeeinrichtung gemessenen Temperaturen, wobei für die an der Wärmeabnahmeeinrichtung (3, 11, 15) gemessene Temperatur (T_{W}) ein Schwellenwert (T_{WS}) vorgegeben wird und dann, wenn die Temperatur (T_{W}) an der Wärmeabnahmeeinrichtung (3, 11, 15) den Schwellenwert (T_{WS}) überschreitet, die Wärmeträgerströmung unterbrochen wird,
dadurch **gekennzeichnet**, daß die Wärmeträgerströmung so lange unterbrochen wird, bis die Temperatur (T_{S}) am Sonnenkollektor (1) einen vorgegebenen Grenzwert (T_{SG}) erreicht, und daß dann, wenn die Temperatur (T_{W}) an der Wärmeabnahmeeinrichtung (3, 11, 15) und die Temperatur (T_{S}) am Sonnenkollektor (1) jeweils über den vorgegebenen Werten (T_{WG} bzw. T_{SG}) liegen, die Wärmeträgerströmung so lange in Gang gesetzt wird, bis die Temperatur (T_{S}) am Sonnenkollektor um eine Differenz (delta T_{S}) unter dem vorgegebenen Grenzwert (T_{SG}) liegt.

2. Verfahren nach Anspruch 1,
dadurch **gekennzeichnet**, daß die Temperaturdifferenz (delta T_{S}) 0 bis 30°C, insbesondere 10 bis 25°C, beträgt.

3. Verfahren nach Anspruch 1 oder 2,
dadurch **gekennzeichnet**, daß der vorgegebene Grenzwert (T_{SG}) am Sonnenkollektor (1) einen vorgegebenen Betrag, insbesondere 5 bis 30°C, unterhalb der maximal verträglichen Temperatur am Sonnenkollektor liegt.

4. Verfahren nach einem der Ansprüche 1, 2 oder 3,
dadurch **gekennzeichnet**, daß der vorgegebene Schwellenwert (T_{WS}) an der Wärmeabnahmeeinrichtung (3, 11, 15) einen vorgegebenen Betrag, insbesondere 10 bis 60°C, unterhalb der maximal verträglichen Temperatur an der Wärmeabnahmeeinrichtung liegt.

5. Verfahren nach einem der vorhergehenden Ansprüche,
dadurch **gekennzeichnet**, daß dann, wenn im Verlauf eines zumindest zwölfstündigen Zyklus die Temperatur (T_{S}) am Sonnenkollektor (1) einen vorgegebenen Schwellenwert (T_{SG}) zumindest einmal überschritten hat, die Wärmeträgerströmung auch dann in Gang gesetzt wird, wenn die Temperatur am Sonnenkollektor (T_{S}) tiefer ist als die Temperatur (T_{W}) an der Wärmeabnahmeeinrichtung (3, 11, 15) und/oder die Temperatur (T_{W}) an der Wärmeabnahmeeinrichtung höher ist als ein vorgegebener wert.

## Claims

1. Method for controlling an installation with solar collectors, comprising at least one solar collector (1) which is connected with at least one heat delivery system (3, 11, 15) through a conduit having passing therethrough a heat transfer medium, in order to transfer heat from said solar collector to said heat delivery system, and a control means (2) for controlling the flow of heat transfer medium in dependence upon temperatures measured at said solar collector and said heat delivery system, a threshold value (T_{WS}) being given for the temperature (T_{W}) measured at said heat delivery system, and whereby the flow of heat transfer medium is interrupted when the temperature (T_{W}) at said heat delivery system (3, 11, 15) exceeds said threshold value (T_{WS}),
**characterized** in that the flow of heat transfer medium is interrupted as long as up to the time when the temperature (T_{S}) at said solar collector (1) will have reached a given limit value (T_{SG}), and in that at the time the temperature (T_{W}) at said heat delivery system (3, 11, 15) and the temperature (T_{S}) at said solar collector (1) are above the given values (T_{WG} and T_{SG}, respectively), the flow of heat transfer medium is put into operation up to the time the temperature (T_{S}) at said solar collector is below the given limit value (T_{SG}) by a difference (delta T_{S}).

2. The method according to claim 1,
**characterized** in that the temperature difference (delta T_{S}) is 0 to 30 °C, more particularly 10 to 25 °C.

3. The method according to claim 1 or 2,
**characterized** in that the given limit value (T_{SG}) at said solar collector (1) remains a given amount, more particularly 5 to 30 °C below the maximum compatible temperature at said solar collector.

4. The method according to any of claims 1, 2 or 3,
**characterized** in that said given threshold value (T_{WS}) of said heat delivery system (3, 11, 15) remains a given amount, more particularly 10 to 60 °C below the maximum compatible temperature at said heat delivery system.

5. The method according to any of the preceding claims,
**characterized** in that in the case where the temperature (T_{S}) at said solar collector (1) exceeds a given threshold value (T_{SG}) at least once in the course of a cycle of at least twelve hours, the flow of heat transfer medium is put into operation even though the temperature at said solar collector (T_{S}) is lower than the temperature (T_{W}) at said heat delivery system (3, 11, 15) and/or the temperature (T_{W}) at said heat delivery system is higher than a given value.

## Revendications

1. Méthode pour contrôler une installation de capteurs solaires comprenant au moins un capteur solaire (1) relié par une conduite traversée par un agent caloporteur à au moins un système de prise de chaleur (3, 11, 15), en vue de transporter de la chaleur du capteur solaire au système de prise de chaleur, et un équipement de contrôle (2) du courant de l'agent caloporteur en fonction des températures mesurées sur le capteur solaire et sur le système de prise de chaleur, une valeur seuil (T_{WS}) étant donnée pour la température (T_{W}) mesurée sur le système de prise de chaleur (3, 11, 15), et le courant de l'agent caloporteur étant interrompu au moment où la température (T_{W}) au système de prise de chaleur (3, 11, 15) dépasse la valeur seuil (T_{WS}),
**caractérisée** en ce que le courant de l'agent caloporteur est interrompu en attendant que la température (T_{S}) au capteur solaire (1) atteint une valeur limite donnée (T_{SG}), et que, lorsque la température (T_{W}) au système de prise de chaleur (3, 11, 15) et la température (T_{S}) au capteur solaire (1) sont supérieures aux valeurs données (respectivement T_{WG} et T_{SG}), le courant de l'agent caloporteur est mis en marche jusqu'à ce que la température (T_{S}) au capteur solaire est inférieure à la valeur limite données (T_{SG}) d'une différence (delta T_{S}).

2. Méthode selon la revendication 1,
**caractérisée** en ce que la différence de température (delta T_{S}) se monte à 0 à 30 °C, plus particulièrement à 10 à 25 °C.

3. Méthode selon la revendication 1 ou 2,
**caractérisée** en ce que la valeur limite donnée (TSG) au capteur solaire (1) est inférieure d'un montant donné, plus particulièrement de 5 à 30 °C, à la température maximale compatible au capteur solaire.

4. Méthode selon l'une des revendications 1, 2 ou 3,
**caractérisée** en ce que la valeur seuil donnée (T_{WS}) au système de prise de chaleur (3, 11, 15) est inférieure d'un montant donné, plus particulièrement de 10 à 60 °C, à la température maximale compatible au système de prise de chaleur.

5. Méthode selon l'une quelconque des revendications précédentes,
**caractérisée** en ce que, au moment où la température (T_{S}) au capteur solaire (1) dépasse une valeur seuil donnée (T_{SG}) au moins une fois au cours d'un cycle d'au moins 12 heures, le courant de l'agent caloporteur est quand même mis en marche lorsque la température du capteur solaire (T_{S}) est inférieure à la température (T_{W}) au système de prise de chaleur (3, 11, 15) et/ou que la température (T_{W}) au système de prise de chaleur est supérieure à une valeur donnée.
